# EUROPEAN PATENT SPECIFICATION

(11) **EP 2 578 448 B1**
(45) Date of publication and mention of the grant of the patent: **09.07.2014**
(21) Application number: 11184154.0
(22) Date of filing: 06.10.2011
(51) Int. Cl.: B60N 2/68

(54) **Passenger transport vehicle seat and vehicle comprising such a seat**
Passagiertransportfahrzeugsitz und Fahrzeug mit einem solchen Sitz
Siège de véhicule de transport de passagers et véhicule comportant un tel siège

(43) Date of publication of application: 10.04.2013
(73) Proprietor: Iveco France S.A., 69200 Vénissieux (FR)
(72) Inventor: Geoffray, Dominique, 42520 Maclas (FR); Sauvaget, Thierry, 69780 Toussieu (FR)
(74) Representative: Cinquantini, Bruno

(56) References cited:
- WO-A1-2008/121754
- US-A1- 2011 233 980

## Description

The present invention relates to a passenger transport vehicle seat comprising at least one support element intended to receive, by bearing, at least one portion of a user's body, and a support structure for the support element, said support element comprising a fastening portion for fixing to the support structure.

The invention in particular, but not exclusively, targets passenger transport vehicles whereof the journey includes at least one station stop, during which people can board the vehicle, or leave it. Such a passenger transport vehicle traditionally comprises a chassis frame mounted on at least two axles supporting rolling members, which are most often wheels provided with pneumatics. Under these conditions, the passenger transport vehicles within the meaning of the invention comprise in particular, but not exclusively, buses, trolleybuses and tramways.

The seats of such a vehicle generally comprise a seat portion element and a backrest, and can be made up of a single piece or several pieces pre-assembled before mounting of the seats in the vehicle.

These seats are fastened to the chassis frame of the vehicle via a load bearing structure, for example made up of base means fixed to the chassis frame and a horizontal beam, fixed to the base means and supporting at least one seat.

A passenger transprot seat according to the preamble of claim 1 is known from WO-A-2008/121754.

The passenger transport vehicle seats are subject to rapid wear, in particular due to their intensive use and the acts of vandalism for which they are often targeted. It may then prove necessary to disassemble the used seats to replace them with new seats.

The disassembly of such a seat is generally long and difficult, because it requires the actuation of the set of means for fixing the seat to the load bearing structure, for example rivets or long bolts to disassemble.

Furthermore, it is generally not possible to disassemble part of a seat, for example only its seat portion or backrest, without removing the entire seat, which is sometimes heavy and bulky, from the vehicle. This removal can prove delicate and create a number of manipulations. It is also necessary to change the entire seat even when a single portion of that seat, for example the seat portion or the backrest, is damaged.

The invention therefore aims to offset these drawbacks by proposing a seat with easier upkeep.

To that end, the invention relates to a seat of the aforementioned type, characterized in that the support structure comprises a longitudinal neck for receiving said fixing portion, a longitudinal beam, mobile in a transverse direction relative to the neck between a locking position in which the fixing portion is locked in a vise between the neck and the beam and a disassembled position in which the fixing portion is mobile relative to the neck and the beam, and means for translating the beam relative to the neck between the locking position and the disassembled position.

The seat according to the invention can comprise one or more of the following features, considered alone or according to all technically possible combinations:
- said driving means comprise at least one cam mounted rotationally mobile relative to said neck around a longitudinal axis,
- said drive means comprise at least one case for closing said neck,
- said cam is mounted rotationally mobile on said case,
- said case comprises at least one armrest,
- said case comprises at least one guide for receiving a support column,
- said fastening portion for fixing to the support structure comprises a peripheral rim of said support element,
- said support element is chosen in the group comprising a seat portion and a backrest,
- the seat comprises at least one seat portion and at least one backrest,
- the seat comprises at least two seat portions symmetrical relative to a longitudinal vertical plane,
- the seat also comprises a double backrest comprising two portions intended to receive, by bearing, a portion of a user's body, said portions being symmetrical relative to said longitudinal vertical plane.

The invention also relates to a passenger transport vehicle, in particular a bus or tramway, comprising at least one seat according to the invention.

The invention will be better understood upon reading the following description, provided solely as an example, and done in reference to the appended drawings, in which:
- Figure 1 is a perspective view of the structure of a pair of seats according to a first embodiment of the invention,
- Figure 2 is an exploded perspective view of the pair of seats of Figure 1;
- Figure 3 is a partial view, in cross-section along a vertical plane comprising axis A-A' of Figure 1, of the pair of seats of Figure 1, in a locking position;
- Figure 4 is a view similar to Figure 3, in a disassembled position;
- Figure 5 is a partial view, in cross-section along a vertical plane orthogonal to axis A-A' of Figure 1, of the pair of seats of Figure 1, in the disassembled position;
- Figure 6 is a partial view, in cross-section along a vertical plane orthogonal to axis A-A' of Figure 1, of the pair of seats of Figure 1, in the locking position;
- Figures 7, 8 and 9 are perspective views of pairs of seats according to alternative embodiments of the invention;
- Figure 10 is a perspective view of the structure of two pairs of back-to-back seats according to another embodiment of the invention; and
- Figure 11 is an exploded perspective view of pairs of seats of Figure 10.

Hereafter, the chosen orientations are provided for information and are to be understood relative to the Figures. In particular, the terms "upper," "lower," "top" and "bottom" are to be understood relative to the orientation selected in the Figures. These terms are used relative to the orientation of the seats mounted on the chassis frame of the passenger transport vehicle, not shown.

Furthermore, the terms "transverse," "axial" and "longitudinal" must be understood in relation to the axis A-A'.

Although the Figures show a pair of seats, the invention also relates to a single seat.

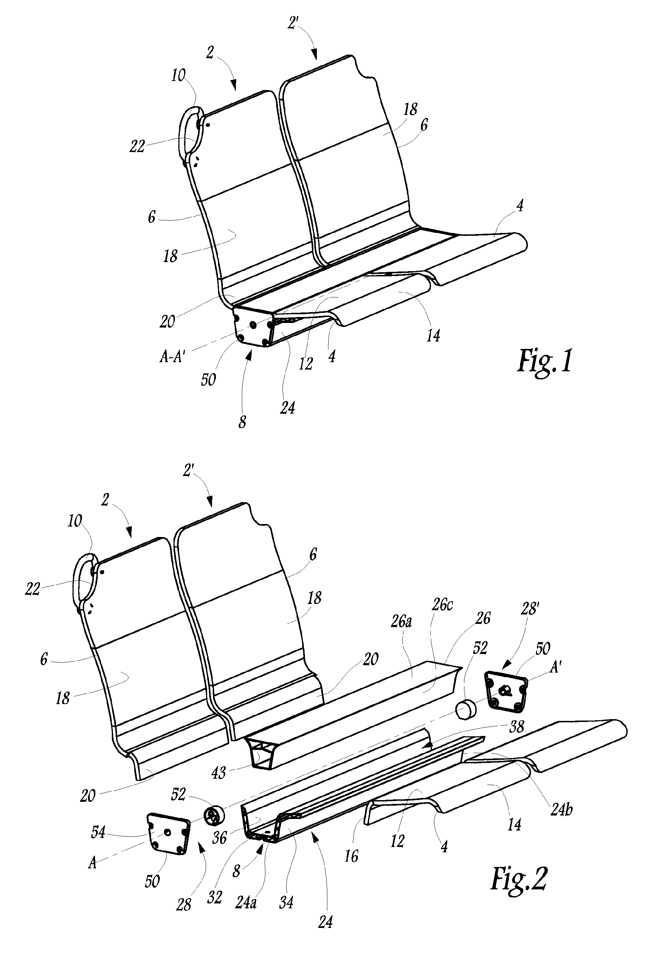

Figure 1 shows a pair of seats 2, 2' according to one particular embodiment of the invention. That pair of seats 2, 2' is in particular intended to be fixed to the chassis frame of a passenger transport vehicle, via base means (not shown). A first of these seats 2, generally called aisle seat, is for example intended to be adjacent to an aisle of the passenger transport vehicle. The second seat 2', for example intended to be adjacent to an inner wall of the vehicle, is then generally called window seat.

Each seat 2, 2' comprises a seat portion 4 and a backrest 6, intended to receive a user's body by bearing. The pair of seats 2, 2' also comprises a support structure 8 for the seat portion 4 and the backrest 6, shared by both seats 2, 2'.

The aisle seat 2 also supports an assist grip handle 10.

The seat portion 4 of each seat includes a substantially planar seat portion part 12, a front rim 14, and a rear fixing rim 16.

The seat portion part 12 is intended to receive part of the user's body by vertical bearing. It has a substantially rectangular shape and extends in a plane that is slightly tilted relative to the horizontal, toward the bottom and back of the seat 2, 2'.

The front rim 14 is an ergonomic rim intended to receive, by bearing, the rear surface of the user's knees. The front rim 14 extends forward and downward from the front edge of the seat portion part 12.

The rear fixing rim 16, visible in Figure 2, is a region for fixing the seat portion 4 to the support structure 8. It extends backward and downward from the rear edge of the seat portion 12, forming a support bend 17 on the support structure 8.

Each backrest 6 comprises a portion 18 for supporting a user's back and a lower fixing rim 20, visible in Figure 2.

The support portion 18 is substantially planar and substantially rectangular. It extends in a longitudinal plane that is slightly inclined relative to the vertical, toward the top and back of the seat 2, 2'.

Each support portion 18 comprises, in an outside upper corner, intended to be oriented toward the aisle and toward the inner wall of the vehicle, respectively, an opening 22 forming a shoulder for fixing an accessory, for example an assist grip handle 10.

The lower fixing rim 20 is a fixing rim of the seatback 6 to the support structure 8. It extends downward, in a substantially vertical plane, from a lower edge of the support portion 18.

The support structure 8 is a portion incorporated in the seats 2 and 2'. It can connect and maintain the seat portion 4 and the backrest 6 relative to each other. It is also adapted to fasten the seats 2 and 2' to the chassis frame of the vehicle.

The support structure 8 thus comprises a support rail 24 for the seat portion 4 and the backrest 6, a chock 26, which can maintain the seat portion 4 and the backrest 6 by squeezing against the support rail 24, and means 28, 28' for gripping the chock 26 against the support rail 24.

The support rail 24 is a longitudinal beam parallel to the axis A-A' of Figure 1, extending between two axial ends 24a and 24b, over a length substantially equal to the width of the pair of seats 2, 2'.

The rail 24 comprises a horizontal lower wall 32, a front wall 34 and a rear wall 36, defining a neck 38, with a transverse section in the shape of a U with a flat bottom. The neck 38 can receive the rear rim 16 of the seat cushion 4 and the lower fixing rim 20 of the backrest 6. The neck 38 is also a cavity for housing the chock 26.

Hereafter, "inside" or "outside" will refer to elements or surfaces oriented toward the inside or outside of the neck 38, respectively.

The inner surface of the rear wall 36 has a shape combined with the outer surface of the lower fixing rim 20. The rim 20 can thus laterally bear by its surface against the rear wall 36.

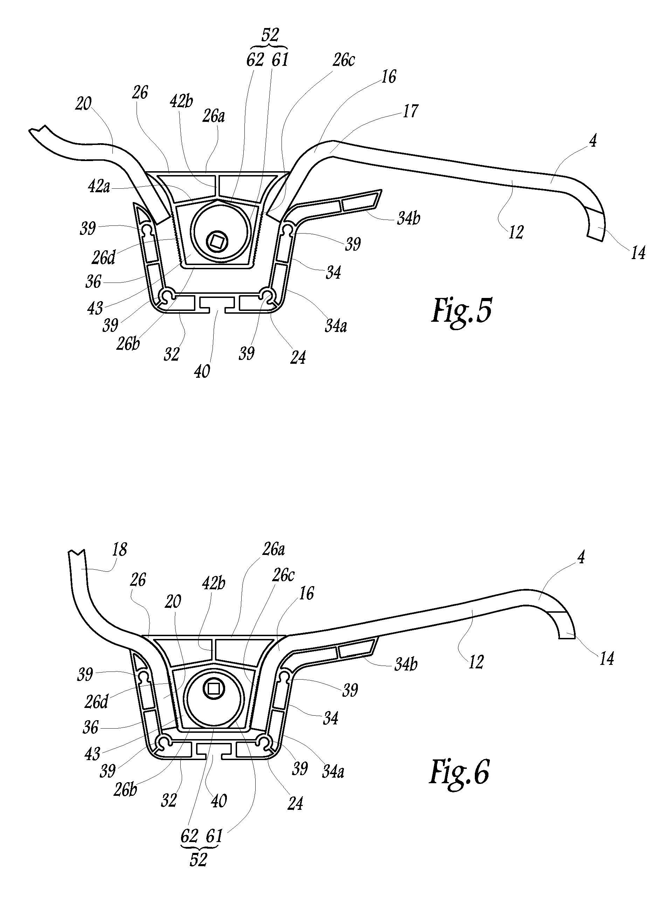

As shown in Figures 5 and 6, the front wall 34 comprises a substantially vertical segment 34a, rising upward from the lower wall 32, and a support segment 34b for the seat portion 4, slightly tilted upward and toward the front of the seat 2, 2'.

The inner surface of the front wall 34 has a shape combined with the inner surface of the rear rim 16. The rim 16 can thus bear, laterally and vertically, by its surface against the front wall 34.

The rail 24 is, for example, a double-wall aluminum profile. It comprises, in each of its lateral edges, screw tappings 39 for fastening lateral cases. Furthermore, the lower wall 32 comprises, over the length of its outer surface, at least two recesses 40 making it possible to fix the rail 24 on support bases of the seats. The recesses 40 are for example arranged near ends 24a and 24b of the rail 24. The rail 24 is thus intended to be fastened to the chassis frame of the vehicle via support bases of the seats.

The chock 26 can keep the seat portion 4, 4' and the backrest 6, 6' in a position bearing against the rail 24 by squeezing. The chock 26 can also receive a portion of a user's body by bearing.

The chock 26 is a longitudinal hollow beam, parallel to the rail 24 and with a length substantially equal to the rail 24. The transverse section of the chock 26 has a generally prismatic shape with a trapezoidal base.

In particular, as shown in Figures 2, 5 and 6, the transverse section of the chock 26 is substantially in the shape of a trapezoid, with the small side oriented downward.

The chock 26 comprises four outer longitudinal walls: an upper wall 26a and a lower wall 26b that are horizontal and parallel, and two front 26c and back 26d walls. The chock 26 also comprises an inner wall 42a, longitudinal and substantially horizontal, and an inner wall 42b, longitudinal and substantially vertical. The inner longitudinal walls 42a and 42b define, inside the chock 26, several housings, including a lower housing 43 between the walls 42a and 42b.

The outer surface of the front wall 26c has a shape combined with the inner surface of the lower rim 20 of the backrest 6. The chock 26 can thus bear by its surface against the backrest 6, 6'.

Furthermore, the outer surface of the rear wall 26d has a shape combined with the upper surface of the rear rim 16, 16'. The chock 26 can thus bear by its surface against the seat portion 4.

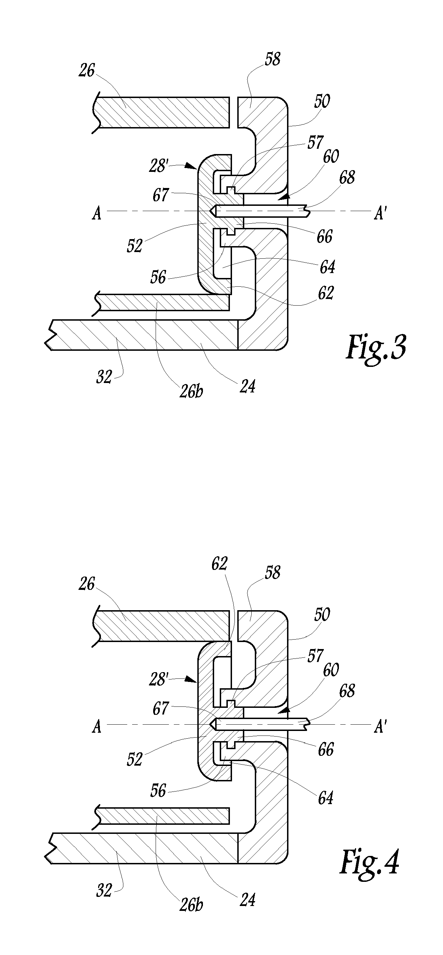

The chock 26 is translationally mobile along a vertical axis between a locking position, shown in Figures 3 and 6, and a disassembled position, shown in Figures 4 and 5.

The gripping means 28, 28' can be actuated by an operator and drive the chock 26, during said actuation, in vertical translation relative to the rail 24 between the locking position and the disassembled position. The gripping means 28, 28' can also lock the chock 26 in its locking position.

The gripping means 28, 28' are positioned to the two lateral ends of the support structure 8. Figures 3 and 4 show a partial cross-section, along a longitudinal vertical plane, of the support structure 8, in particular illustrating the gripping means 28', the gripping means 28 having an identical structure and symmetrical shape, along a transverse plane, relative to the gripping means 28'.

Each of the gripping means 28, 28' comprises a lateral case 50 and a gripping cam 52.

The lateral case 50 is fixed to an axial end 24a or 24b of the rail 24. It comprises a transverse wall 54, an inner rim 56 and a peripheral rim 58. The transverse wall 54 has a substantially trapezoidal shape, advantageously combined with the transverse shape of the neck 38 as defined by the rear wall 36, the lower wall 32 and the segment 34a of the front wall 34 of the rail 24.

The transverse wall 54 is also provided with a through inner opening 60, with axis A-A' off-centered toward the top of the lateral case 50.

The inner rim 56 forms a tubular sleeve protruding parallel to axis A-A' from the edge of the inner opening 60 toward the rail 24. It is provided, in its inner surface, with a transverse groove 57 for retaining the cam 52.

The peripheral rim 58 protrudes parallel to the axis A-A' from the periphery of the planar wall 54 toward the rail 24. Its transverse section is trapezoidal. It is provided, at each of its corners, with a through opening for the passage of a screw, parallel to axis A-A'. Each of these openings is arranged at a screw hole 39 of the rail 24. The lateral case 50 is thus fixed to one end of the rail 24 using four screws.

The cam 52 is secured to the lateral case 50. It is housed in the lower housing 42c of the chock 26.

The cam 52 is mounted, relative to the lateral case 50, rotationally mobile around axis A-A' between a locking position and a disassembled position. It can drive the chock 26 in vertical translation relative to the rail 24, when it moves between the locking position and the disassembled position.

The cam 52 has a substantially cylindrical shape. Its transverse section comprises a substantially circular portion 61 and a planar portion forming a flat 62. The flat 62 is a surface for applying a thrust force on the inner wall 42a of the chock 26, during rotation of the cam 52.

The outer side surface of the cam 52 is provided with an annular groove 64 defining a protrusion 66 for fixing to the case 50. The protrusion 66 is cylindrical, with axis A-A' cutting the transverse section of the cam 52 over a ray diametrically opposite the flat 62.

The outer surface of the protrusion 66 has a shape combined with the inner surface of the inner rim 56. In particular, the outer surface of the protrusion 66 includes a rib having an inner stop surface, with a shape combined with the transverse groove of the inner rim 56.

The protrusion 66 is also pierced with a blind hole 67 with a polygonal transverse section, for example square.

The protrusion 66 of the cam 52 is inserted into the inner rim 56 of the case 50. The cam 52 is thus maintained axially and transversely relative to the case 50, but rotationally mobile around axis A-A', between its locking position and its disassembled position. The cam 52 can be rotated around axis A-A' by a tool 68, in particular a hexagonal driver, having an end with a shape combined with the hole 67. For clarity of the drawing, the tool 68 is shown only in Figures 3 and 4.

In the locking position, illustrated in Figures 3 and 6, the flat 62 is oriented downward, overhanging the axis A-A', vertically bearing against the lower wall 26b of the chock 26. The chock 26 is then positioned as low as possible in the neck 38.

The seat portion 4 and the seatback 6 are held in a vise between the rail 24 and the chock 26. The seat portion 4 and the backrest 6 are thus fixed together. More specifically, the lower rim 20 of the backrest 6 is held in a vise between the rear walls 36 and 26d of the rail 24 and the chock 26. The rear rim 16, 16' of the seat portion 4 is also held in a vise between the front walls 34 and 26c of the rail 24 and the chock 26. Furthermore, the seat portion part 12 is kept bearing against the support segment 34b of the front wall 34.

In the locking position, the upper wall 26a of the chock 26 extends in the continuation of the seat portion part 12, 12'. It thus forms a bearing support for a user's body, complementary to the seat portion part 12.

In the disassembled position, the flat 62 is oriented upward, vertically bearing against the inner wall 42a of the chock 26. The chock 26 then protrudes vertically outside the neck 38. The distance between the walls 34 and 26c, on the one hand, 36 and 26d, on the other hand is respectively greater than the thickness of the rims 16 and 20. The seat portion 4 and the backrest 6 can be freed from the support structure 8 and free to be removed from said structure.

The assembly and disassembly of the pair of seats 2, 2' will now be described.

Initially, as shown in Figures 4 and 5, the seats 2, 2' are in the disassembled position. To mount the seats 2, 2', the operator engages the rear rim 16 of the seat portion and the lower rim 20 of the backrest 6 in the neck 38 and consecutively actuates the gripping means 28, 28'.

To that end, the operator engages the tool 68 in the hole 66, rotates said tool around axis A-A', causing the cam 52 to rotate by about 180°, until the flat 62 is oriented downward.

When the cam 52 rotates, the flat 62 abuts against the lower wall 26b of the chock 26 and translates the latter downward, to the locking position.

To disassemble the seats 2, 2', for example to change the seat portion and/or the backrest, the operator consecutively actuates the gripping means 28, 28' to translate the chock 26 upward as far as a disassembled position, thereby releasing the seat portions 4 and the backrests 6.

To that end, the operator again engages the tool 68 in the hole 66, rotates said tool around the axis A-A' by an angle of about 180°, until the flat 62 is oriented upward. When the cam 52 is rotated, the flat 62 abuts against the inner wall 26b of the chock 26 and translates it upward, as far as a disassembled position.

The shapes of the different elements making up the seats 2, 2' are described as examples and can be customized.

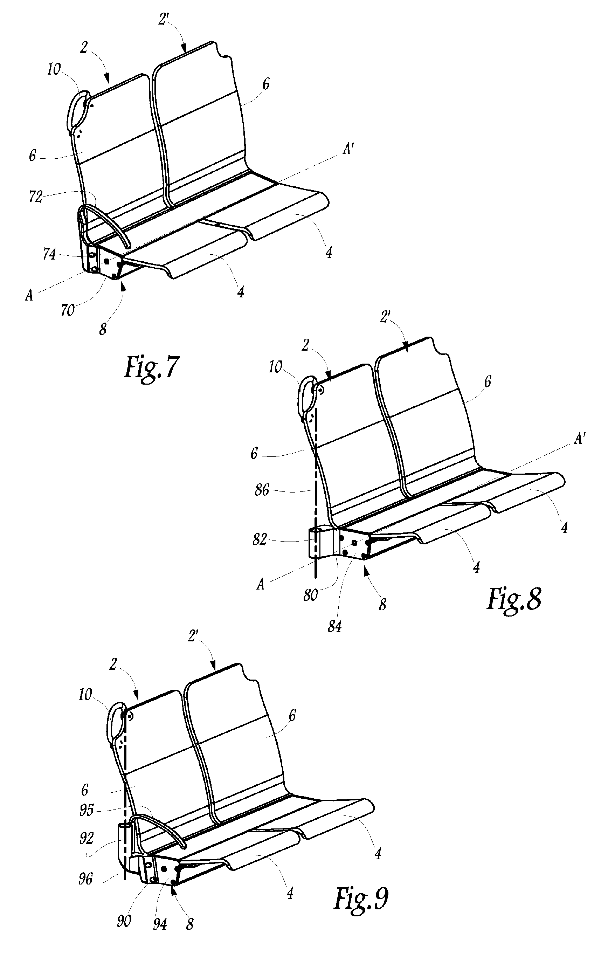

In particular, in alternative embodiments shown in Figures 7, 8 and 9, the lateral cases 50 are modified to incorporate additional support elements for a user and/or guides for receiving a support column. The other component elements of the seats 2, 2' remain unchanged.

In the embodiment illustrated in Figure 7, the lateral 70 situated on the aisle side comprises an armrest 72, rising from the rear of the transverse wall 74 of the case 70 on the aisle seat side.

In the embodiment illustrated in Figure 8, the lateral case 80 situated on the aisle side comprises a guide 82 for receiving a support column, extending rearward from the transverse wall 84 of the case. The support column is shown by its axis line 86.

In the embodiment illustrated in Figure 9, the lateral case 90 situated on the aisle side comprises a guide 92 for receiving a support column, extending rearward and upward from the transverse wall 94 of the case 90, and an armrest 95. This other support column is also shown by its axis line 96.

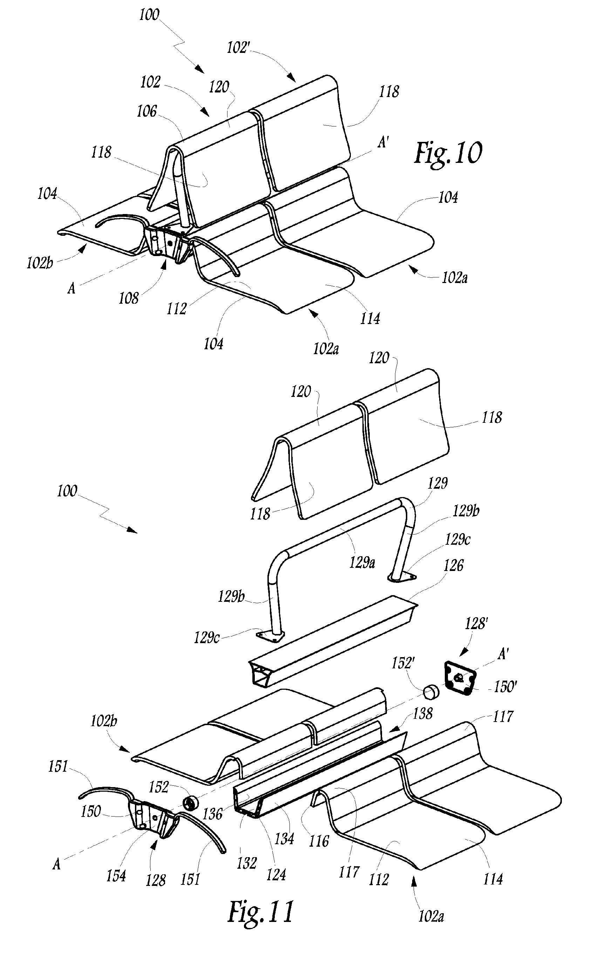

Figures 10 and 11 show a structure 100 comprising a pair of double seats 102, 102' back to back according to another embodiment of the invention, each seat defining two seat portion zones that are symmetrical relative to a longitudinal vertical plane containing axis A-A'.

Each double seat 102, 102' thus comprises two seat portion zones 102a and 102b, symmetrical relative to the longitudinal vertical plane.

These seats are in particular intended to be fixed to the chassis frame of a passenger transport vehicle, for example above a wheel of said vehicle. A first double seat 102 is for example intended to be adjacent to an aisle of the passenger transport vehicle. The second double seat 102' is for example intended to be adjacent to an inner wall of the vehicle.

Each double seat 102, 102' thus comprises two seat portions 104 and a double backrest 106.

The structure 100 also comprises a support structure 108 for the seat portions 104 and backrests 106, shared by the two double seats 102, 102'.

The seat portions 104 are identical. Each seat portion 104 has a seat portion part 112, a front rim 114 and a rear fixing rim 116.

The seat portion 112 is intended to receive a user's body by bearing. It comprises a first substantially rectangular horizontal portion and a second portion rising from behind the first portion upward and rearward from the seat portion zones 102a and 102b. This second portion is in particular intended to receive the bottom of a user's back by bearing.

The front rim 114 is an ergonomic rim intended to receive the back surface of the user's knees by bearing. The front rim 114 extends forward and downward from the front edge of the seat portion part 112.

The rear fixing rim 116, visible in Figure 11, is a fastening region for fixing the seat portion 104 to the support structure 108. It extends backward and downward from the rear edge of the second portion of the seat portion part 112, forming a support bend 117 on the support structure 108.

The double backrest 106 comprises two symmetrical support portions 118 for a user's back and a bend 120 for connecting the support portions 118. The double backrest 106 thus has a transverse section in the shape of an inverted U.

The support structure 108 can secure the seat portions 104 and the double backrest 106 of each double seat. It is also adapted to fasten the seats 102, 102' to the chassis frame of the vehicle.

The support structure 108 thus includes a structure for maintaining the seat portions 104, comprising a support rail 124 for the seat portions 104, a chock 126, able to keep the seat portions 104 against the support rail 124 by squeezing, and means 128, 128' for gripping the chock 126 against the support element 124.

The support structure 108 also includes a support bar 129 for the double backrests 106.

The rail 124 is symmetrical relative to a longitudinal plane. The rail 124 thus comprises a horizontal lower wall 132 and two symmetrical side walls 134 and 136 defining a neck 138, with a U-shaped transverse section. The inner surface of the side walls 134 and 136 has a shape combined with the lower surface of the rear rims 116. The seat portions 104 can thus bear laterally and vertically by their surfaces against the side walls 124b.

The rail 124 is for example an aluminum profile with a double wall, comprising, in each of its lateral edges, screw holes for fixing lateral cases, as in the first embodiment.

The rail 124 is for example intended to be fixed to the chassis frame of the passenger transport vehicle.

The chock 126 has a similar structure to the chock 26 according to the first embodiment. Its upper wall is also provided with a screw hole in each of its corners.

The chock 126 is translationally mobile along a vertical axis between a locking position, in which the rear rims 116 of the seat portions 104 are held in a vise and kept in position between the chock 126 and the beam 124, and a disassembled position in which the seat portions 104 are released from the support structure 108 and free to be removed from said structure.

The gripping means 128, 128' are positioned at both axial ends of the rail 124. They each comprise a lateral case 150, 150' and a gripping cam 152, 152'. The gripping means 128', intended to be adjacent to an inner wall of the vehicle, are similar to the gripping means 28' according to the first embodiment.

The gripping means 128, intended to be adjacent to an aisle of the vehicle, comprise a cam 152 similar to the cam 52 described in reference to the first embodiment, and a lateral case 150 provided with two armrests 151. The lateral case thus comprises a transverse wall 154 and two armrests 151 secured to the transverse wall and extending toward the rim 114 of the seats.

The gripping means 128, 128' can be actuated by an operator and drive the chock 126 in vertical translation relative to the rail 124 between a locking position of the seat portions 104 and a disassembled position of said seat portions. The gripping means 128, 128' can also lock the chock 126 in the locking position.

The support bar 129 of the double backrests 106 can support and fix the double backrest 106 to the seat 102, 102'.

The bar 129 thus comprises a horizontal support runner 129a for the double backrests 106, extended at both of its ends by two substantially vertical posts 129b fixed to the support structure 108.

The bar 129 has a length substantially twice as long as the width of a backrest 106. The bend 120 of each double backrest 106 bears vertically against the horizontal runner 129a. Each double backrest 106 is fixed to the runner 129a, for example using screws.

Each of the posts 129b is for example fixed to the support structure 108 via a fixing plate 129c. The plate 129c is welded to the lower end of the post 129 and screwed to the chock 126.

To mount the seats 102, 102', the operator engages the rear rim 116 of the seat portions 104 in the neck 138 and actuates the gripping means 128, 128'. The operator thus drives the chock 126 in translation downward, as far as the locking position, in which the seat portions 104 are held in a vise between the front and rear walls of the chock 126 and the front 134 and rear 136 walls of the rail 124.

Furthermore, the operator engages the bend 120 of each double backrest 106 against the horizontal runner 129a and fixes the double backrests 106 to the runner 129a using screws.

To disassemble at least one seat portion 104 from a seat, the operator consecutively actuates the gripping means 128 and 128' to drive the chock 126 in translation upward as far as a disassembled position, thereby releasing the four seat portions 104.

It is understood from the preceding description how the structure of the seat according to the invention makes it possible to facilitate assembly and maintenance.

In fact, such a seat can be assembled in the vehicle itself, its backrest and seat portion being able to be inserted separately into the vehicle, then mounted in the vehicle. This mounting requires the actuation of only two gripping members, which limits the number of operations to be performed.

Furthermore, in case of wear of the seat portion or backrest of a seat, it is possible to disassemble and replace only that seat portion or only that backrest without having to remove the entire seat from the vehicle.

It must, however, be understood that the embodiments presented above are not limiting.

In particular, although the Figures show one or two pairs of seats, the invention also relates to a single seat.

Thus, the support structure 8 can be associated with a single seat, i.e. can support a single seat portion and a single backrest.

Likewise, the support structure 108 can be associated with a single pair of seats back to back.

Moreover, according to other embodiments, the seat comprises a single support element for a user's body, for example only a backrest or only a seat portion.

Moreover, the backrest and the seat portion can for example comprise a covering associated with trim.

## Claims

1. A passenger transport vehicle seat (2, 2'; 102, 102') comprising at least one support element (4, 6; 104, 106) intended to receive, by bearing, at least one portion of a user's body, and a support structure (8; 108) for the support element (4, 6; 104, 106), said support element (4, 6; 104, 106) comprising a fastening portion (16, 20; 116) for fixing to the support structure (8, 108),
**characterized in that** the support structure (8; 108) comprises a longitudinal neck (38; 138) for receiving said fixing portion (16, 20; 116), a longitudinal beam (26; 126), mobile in a transverse direction relative to the neck (38; 138) between a locking position in which the fixing portion (16, 20; 116) is locked in a vise between the neck (38; 138) and the beam (26; 126) and a disassembled position in which the fixing portion (16, 20; 116) is mobile relative to the neck (38; 138) and the beam (26; 126), and means (28, 28'; 128, 128') for translating the beam (26; 126) relative to the neck (38; 138) between the locking position and the disassembled position.

2. The seat (2, 2'; 102, 102') according to claim 1, **characterized in that** said driving means (28, 28; 128, 128') comprise at least one cam (52; 152, 152') mounted rotationally mobile relative to said neck (38; 138) around a longitudinal axis (A-A').

3. The seat (2, 2'; 102, 102') according to any one of claims 1 or 2, **characterized in that** said drive means (28, 28' ; 128, 128') comprise at least one case (50 ; 70 ; 80 ; 90 ; 150, 150') for closing said neck (38; 138).

4. The seat (2, 2'; 102, 102') according to claims 2 and 3, **characterized in that** said cam (52 ; 152, 152') is mounted rotationally mobile on said case (50 ; 70 ; 80 ; 90 ; 150, 150').

5. The seat (2, 2'; 102, 102') according to any one of claims 3 or 4, **characterized in that** said case (80; 90; 150) comprises at least one armrest (72; 95; 151).

6. The seat (2, 2'; 102, 102') according to any one of claims 3 to 5, **characterized in that** said case (80; 90) comprises at least one guide (82; 92) for receiving a support column (86, 96).

7. The seat (2, 2'; 102, 102') according to any one of the preceding claims, **characterized in that** said fastening portion for fixing to the support structure (8; 108) comprises a peripheral rim (16, 20; 116) of said support element (4, 6; 104, 106).

8. The seat (2, 2'; 102, 102') according to any one of the preceding claims, **characterized in that** said support element (4, 6; 104, 106) is chosen in the group comprising a seat portion (4; 104) and a backrest (6; 106).

9. The seat (2, 2') according to claim 8, **characterized in that** it comprises at least one seat portion (4; 104) and at least one backrest (6; 106).

10. The seat (102, 102') according to claim 8, **characterized in that** it comprises at least two seat portions (104) symmetrical relative to a longitudinal vertical plane.

11. The seat (102, 102') according to claim 10, **characterized in that** it also comprises a double backrest (106) comprising two portions (118) intended to receive, by bearing, a portion of a user's body, said portions (118) being symmetrical relative to said longitudinal vertical plane.

12. A passenger transport vehicle, in particular a bus or tramway, comprising at least one seat (2, 2'; 102, 102') according to any one of the preceding claims.

## Patentansprüche

1. Sitz (2, 2'; 102, 102') für ein Passagier-Transport-Fahrzeug, umfassend wenigstens ein Trage-Element (4, 6; 104, 106), von dem intendiert ist, dass es durch Tragen wenigstens einen Teil eines Körpers eines Benutzers aufnimmt, und eine Trage-Struktur (8; 108) für das Trage-Element (4, 6; 104, 106), wobei das Trage-Element (4, 6; 104, 106) einen Befestigungs-Teil (16, 20; 116) zum Fixieren der Trage-Struktur (8; 108) umfasst;
**dadurch gekennzeichnet, dass** die Trage-Struktur (8; 108) umfasst: einen länglichen Ansatz (38; 138) zum Aufnehmen des Fixier-Teils (16, 20; 116); einen länglichen Balken (26; 126), beweglich in Querrichtung relativ zu dem Ansatz (38; 138) zwischen einer Verriegelungs-Position, in der der Fixier-Teil (16, 20; 116) in einer Klemme zwischen dem Ansatz (38; 138) und dem Balken (26; 126) verriegelt ist, und einer demontierten Position, in der der Fixier-Teil (16, 20; 116) beweglich relativ zu dem Ansatz (38; 138) und dem Balken (26; 126) ist; und Einrichtungen (28, 28'; 128, 128') zum Verschieben des Balkens (26; 126) relativ zu dem Ansatz (38; 138) zwischen der Verriegelungs-Position und der demontierten Position.

2. Sitz (2, 2`; 102, 102') nach Anspruch 1, **dadurch gekennzeichnet, dass** die Antriebs-Einrichtungen (28, 28'; 128, 128') wenigstens einen Mitnehmer (52; 152, 152') umfassen, der um eine Längsachse (A-A') drehbar beweglich relativ zu dem Ansatz (38; 138) montiert ist.

3. Sitz (2, 2'; 102, 102') nach irgendeinem der Ansprüche 1 oder 2, **dadurch gekennzeichnet, dass** die Antriebs-Einrichtungen (28, 28'; 128, 128') wenigstens ein Gehäuse (50; 70; 80; 90; 150, 150') zum Schließen des Ansatzes (38; 138) umfassen.

4. Sitz (2, 2'; 102, 102') nach den Ansprüchen 2 und 3, **dadurch gekennzeichnet, dass** der Mitnehmer (52; 152, 152') drehbar beweglich an dem Gehäuse (50; 70; 80; 90; 150, 150') montiert ist.

5. Sitz (2, 2'; 102, 102') nach irgendeinem der Ansprüche 3 oder 4, **dadurch gekennzeichnet, dass** das Gehäuse (80; 90; 150) wenigstens eine Armlehne (72; 95; 151) umfasst.

6. Sitz (2, 2'; 102, 102') nach irgendeinem der Ansprüche 3 bis 5, **dadurch gekennzeichnet, dass** das Gehäuse (80; 90) wenigstens eine Führung (82; 92) zum Aufnehmen einer Stütz-Säule (86, 96) umfasst.

7. Sitz (2, 2'; 102, 102') nach irgendeinem der vorangehenden Ansprüche, **dadurch gekennzeichnet, dass** der Befestigungs-Teil zum Fixieren der Trage-Struktur (8; 108) einen peripheren Rand (16, 20; 116) des Trage-Elements (4, 6; 104, 106) umfasst.

8. Sitz (2, 2'; 102, 102') nach irgendeinem der vorangehenden Ansprüche, **dadurch gekennzeichnet, dass** das Trage-Element (4, 6; 104, 106) gewählt ist aus der Gruppe, die besteht aus einem Sitz-Teil (4; 104) und einer Rückenlehne (6; 106).

9. Sitz (2, 2') nach Anspruch 8, **dadurch gekennzeichnet, dass** er wenigstens einen Sitz-Teil (4; 104) und wenigstens eine Rückenlehne (6; 106) umfasst.

10. Sitz (102, 102') nach Anspruch 8, **dadurch gekennzeichnet, dass** er wenigstens zwei Sitz-Teile (104) umfasst, die symmetrisch bezüglich einer Längs-Vertikal-Ebene sind.

11. Sitz (102, 102') nach Anspruch 10, **dadurch gekennzeichnet, dass** er auch eine doppelte Rückenlehne (106) umfasst, die zwei Teile (118) umfasst, von denen intendiert ist, dass sie durch Tragen einen Teil eines Körpers eines Benutzers aufnehmen, wobei die Teile (118) symmetrisch bezüglich der Längs-Vertikal-Ebene sind.

12. Passagier-Transport-Fahrzeug, insbesondere ein Bus oder eine Straßenbahn, umfassend wenigstens einen Sitz (2, 2'; 102, 102') gemäß irgendeinem der vorangehenden Ansprüche.

## Revendications

1. Siège de véhicule de transport de passagers (2, 2' ; 102, 102') comprenant au moins un élément de support (4, 6 ; 104, 106) destiné à recevoir, en la supportant, au moins une portion du corps d'un utilisateur, et une structure de support (8 ; 108) pour l'élément de support (4, 6 ; 104, 106), ledit élément de support (4, 6 ; 104, 106) comprenant une portion de fixation (16, 20 ; 116) pour la fixation à la structure de support (8, 108),
**caractérisé en ce que** la structure de support (8 ; 108) comprend un col longitudinal (38 ; 138) pour recevoir ladite portion de fixation (16, 20 ; 116), une poutre longitudinale (26 ; 126), mobile dans une direction transversal relativement au col (38 ; 138) entre une position de verrouillage dans laquelle la portion de fixation (16, 20 ; 116) est verrouillée dans un outil de maintien entre le col (38 ; 138) et la poutre (26 ; 126) et une position démontée dans laquelle la portion de fixation (16, 20 ; 116) est mobile relativement au col (38, 138) et à la poutre (26 ; 126), et des moyens (28, 28' ; 128, 128') pour translater la poutre (26 ; 126) relativement au col (38 ; 138) entre la position de verrouillage et la position démontée.

2. Siège (2, 2' ; 102, 102') selon la revendication 1, **caractérisé en ce que** lesdits moyens d'entraînement (28, 28' ; 128, 128') comprennent au moins une came (52 ; 152, 152') montée à rotation d'une manière mobile relativement audit col (38 ; 138) autour d'un axe longitudinal (A-A').

3. Siège (2, 2' ; 102, 102') selon l'une quelconque des revendications 1 ou 2, **caractérisé en ce que** lesdits moyens d'entraînement (28, 28' ; 128, 128') comprennent au moins un boîtier (50 ; 70 ; 80 ; 90 ; 150, 150') pour fermer ledit col (38 ; 138).

4. Siège (2, 2' ; 102, 102') selon les revendications 2 et 3, **caractérisé en ce que** ladite came (52 ; 152, 152') est montée à rotation d'une manière mobile sur ledit boîtier (50 ; 70 ; 80 ; 90 ; 150, 150').

5. Siège (2, 2' ; 102, 102') selon l'une des revendications 3 ou 4, **caractérisé en ce que** ledit boîtier (80 ; 90 ; 150) comprend au moins un accoudoir (72 ; 95 ; 151).

6. Siège (2, 2' ; 102, 102') selon l'une quelconque des revendications 3 à 5, **caractérisé en ce que** ledit boîtier (80, 90) comprend au moins un guide (82 ; 92) pour recevoir une colonne de support (86, 96).

7. Siège (2, 2' ; 102, 102') selon l'une quelconque des revendications précédentes, **caractérisé en ce que** ladite portion de fixation pour la fixation à la structure de support (8 ; 108) comprend un bord périphérique (16, 20 ; 116) dudit élément de support (4, 6 ; 104, 106).

8. Siège (2, 2' ; 102, 102') selon l'une quelconque des revendications précédentes, **caractérisé en ce que** ledit élément de support (4, 6 ; 104, 106) est sélectionné dans le groupe comprenant une portion de siège (4 ; 104) et un dossier (6 ; 106).

9. Siège (2, 2') selon la revendication 8, **caractérisé en ce qu'**il comprend au moins une portion de siège (4 ; 104) et au moins un dossier (6 ; 106).

10. Siège (102, 102') selon la revendication 8, **caractérisé en ce qu'**il comprend au moins deux portions de siège (104) symétriques relativement à un plan vertical longitudinal.

11. Siège (102, 102') selon la revendication 10, **caractérisé en ce qu'**il comprend également un dossier double (106) comprenant deux portions (118) destinées à recevoir, en la supportant, une portion du corps d'un utilisateur, lesdites portions (118) étant symétriques relativement audit plan vertical longitudinal.

12. Véhicule de transport de passagers, en particulier un bus ou tramway, comprenant au moins un siège (2, 2' ; 102, 102') selon l'une quelconque des revendications précédentes.
